# EUROPEAN PATENT APPLICATION

(11) **EP 4 503 754 A1**
(43) Date of publication of application: **05.02.2025**
(21) Application number: 24731226.7
(22) Date of filing: 11.06.2024
(51) Int. Cl.: H04W 48/16, H04W 8/18, H04W 76/18, H04W 24/08, H04W 48/18, H04W 36/14, H04W 36/00, H04W 80/02, H04W 84/06

(54) **ELECTRONIC DEVICE SUPPORTING NON-TERRESTRIAL NETWORK COMMUNICATION AND OPERATION METHOD THEREOF**

(30) Priority: 16.06.2023 KR 20230077316; 17.07.2023 KR 20230092626
(71) Applicant: Samsung Electronics Co., Ltd, Suwon-si, Gyeonggi-do 16677 (KR)
(72) Inventor: LEE, Yunbeom, Suwon-si Gyeonggi-do 16677 (KR); KO, Heeseok, Suwon-si Gyeonggi-do 16677 (KR); KIM, Jongyul, Suwon-si Gyeonggi-do 16677 (KR); JUNG, Joonyoung, Suwon-si Gyeonggi-do 16677 (KR)
(74) Representative: HGF
(86) International application number: PCT/KR2024/007939
(87) International publication number: WO 2024/258140

(57) **Abstract**

According to an embodiment, in a computer-readable storage medium storing at least one instruction, the at least one instruction, when executed by at least one processor of an electronic device, may enable the electronic device to perform at least one operation. The at least one operation may comprise identifying a failure in first communication corresponding to a first protocol stack corresponding to a first SIM available to the at least one processor and a failure in second communication corresponding to a second protocol stack corresponding to a second SIM available to the at least one processor. The at least one operation may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication. Other various embodiments are possible as well.

## Description

### [Technical Field]

An embodiment of the disclosure relate to an electronic device supporting non-terrestrial network communication and a method for operating the same.

### [Background Art]

Recently, electronic devices supporting non-terrestrial network communication (e.g., satellite communication) are being actively introduced. As an example, an electronic device may communicate with a satellite of a satellite communication company by using the frequency and communication scheme of the company. As an example, an electronic device may communicate with a satellite using a long-term evolution (LTE) standard cellular frequency based on the LTE standard (or 5G standard). As an example, an electronic device may communicate with a satellite based on the 5G non-terrestrial networks (NTN) standard.

For example, when an electronic device communicates with a non-terrestrial network based on the LTE standard, some of the frequencies defined in the LTE standard may be allocated for non-terrestrial communication. An electronic device may perform satellite communication using a protocol stack used in terrestrial communication and may require no further protocol stack for non-terrestrial communication. Electronic devices may perform communication without distinguishing between non-terrestrial communication and terrestrial communication. For example, the electronic device may perform a cell scan, camp on a cell that meets cell selection criteria, and access the network (which may include a camp-on procedure, a random access (RA) procedure, a connection establishment procedure, and/or attaching (which may include registration)). The electronic device may perform operations for camping on to a cell that meets the cell selection criteria and accessing the network, without distinguishing between non-terrestrial communication and terrestrial communication. Accordingly, the electronic device may prepare to perform non-terrestrial communication in a scheme that is substantially the same as terrestrial communication.

Meanwhile, in a wireless communication system, an electronic device (e.g., user equipment (UE)) may access a wireless communication network and use a voice communication or data communication service in a fixed position or on the move. To provide a communication service to an electronic device, an appropriate authentication process is required. A universal integrated circuit card (UICC) is inserted into the electronic device, and authentication is performed between the electronic device and the server of the mobile network operator (MNO) through a universal subscriber identity module (USIM) installed in the UICC. UICC may be called subscriber identity module (SIM) in the case of global system for mobile communications (GSM) and universal subscriber identity module (USIM) in the case of wideband code division multiple access (WCDMA), and long term evolution (LTE). The USIM card or SIM card may be provided as a standalone UICC or may be embedded (e.g., embedded SIM, eSIM) in the electronic device or may be integrated into at least one chip included in the electronic device (e.g., integrated SIM, iSIM).

If the user of the electronic device subscribes to a wireless communication service provided by the mobile network operator, the mobile network operator may provide a UICC (e.g., a SIM card or a USIM card) to the user. The user may insert the provided UICC into her electronic device. According to an embodiment, when the user of the electronic device subscribes to the wireless communication service provided by the mobile network operator, the user may receive information to be stored in the UICC (e.g., eSIM card or iSIM card) included in the electronic device from the mobile network operator. If the UICC is inserted into the electronic device or the information to be stored in the UICC is received from the mobile network operator, the USIM application installed in the UICC may perform an appropriate authentication process with the mobile network operator's server, which stores the same value, using to the international mobile subscriber identity (IMSI) value stored in the UICC and the encryption key value for authentication. After the appropriate authentication process is performed, the wireless communication service may be used.

When information related to the SIM is provided to the UICC (e.g., eSIM or iSIM) installed in the electronic device from the server of the mobile network operator, an appropriate authentication process may be performed with the mobile network operator's server that stores the same value using an encryption key value for authentication and the international mobile subscriber identity (IMSI) value that may be generated through information related to the SIM or included in the SIM-related information. After the appropriate authentication process is performed, the wireless communication service may be used.

The electronic device may support two or more SIMs, which may be referred to as a dual-SIM or multi-SIM electronic device. Mounting two or more SIM cards in an electronic device may mean that at least two or more independent UICCs are configured. Or, mounting two or more SIM cards in an electronic device may mean that at least one or more independent UICCs and at least one or more eSIM cards are configured. Or, mounting two or more SIM cards in an electronic device may mean that at least one or more independent UICCs and at least one or more iSIM card are configured. Or, mounting two or more SIM cards in an electronic device may mean that an eSIM card or iSIM card supporting at least two or more networks is configured.

### [Disclosure of Invention]

### [Solution to Problems]

According to an embodiment, in a computer-readable storage medium storing at least one instruction, wherein the at least one instruction, when executed by at least one processor of an electronic device, may cause the electronic device to perform at least one operation. The at least one operation may comprise identifying a failure in first communication corresponding to a first protocol stack corresponding to a first SIM available to the at least one processor and a failure in second communication corresponding to a second protocol stack corresponding to a second SIM available to the at least one processor. The at least one operation may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

According to an embodiment, an electronic device may comprise memory and at least one processor operatively connected to the memory. The memory may store at least one instruction that, when executed by the at least one processor, cause the electronic device to perform at least one operation. The at least one operation may comprise identifying a failure in first communication corresponding to a first protocol stack corresponding to a first SIM available to the at least one processor and a failure in second communication corresponding to a second protocol stack corresponding to a second SIM available to the at least one processor. The at least one operation may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

According to an embodiment, a method for operating an electronic device may comprise identifying a failure in first communication corresponding to a first protocol stack corresponding to a first SIM available to the at least one processor and a failure in second communication corresponding to a second protocol stack corresponding to a second SIM available to the at least one processor. The method for operating the electronic device may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

### [Brief Description of Drawings]

FIG. 1A is a block diagram illustrating an electronic device in a network environment according to an embodiments;
FIG. 1B is a view illustrating a network environment including an electronic device according to various embodiments;
FIG. 2 is a view illustrating an electronic device and a long-range communication network environment according to an embodiment;
FIG. 3 is a view illustrating access to an electronic device according to an embodiment;
FIG. 4 is a view illustrating a non-terrestrial network system according to an embodiment;
FIG. 5A is a flowchart illustrating an operation method of an electronic device according to an embodiment;
FIG. 5B is a view illustrating an electronic device according to an embodiment;
FIG. 5C is a view illustrating a scan of a terrestrial network and a non-terrestrial network by an electronic device according to an embodiment;
FIG. 5D is a flowchart illustrating an operation method of an electronic device according to an embodiment;
FIG. 6 is a flowchart illustrating an operation method of an electronic device according to an embodiment;
FIG. 7 is a flowchart illustrating an operation method of an electronic device according to an embodiment;
FIG. 8 is a flowchart illustrating an operation method of an electronic device according to an embodiment;
FIG. 9 is a view illustrating handover from a non-terrestrial network cell to a terrestrial network cell according to an embodiment;
FIG. 10 is a view illustrating handover from a non-terrestrial network cell to a terrestrial network cell according to an embodiment; and
FIG. 11 is a view illustrating operations associated with protocol stacks of an electronic device according to an embodiment.

### [Mode for the Invention]

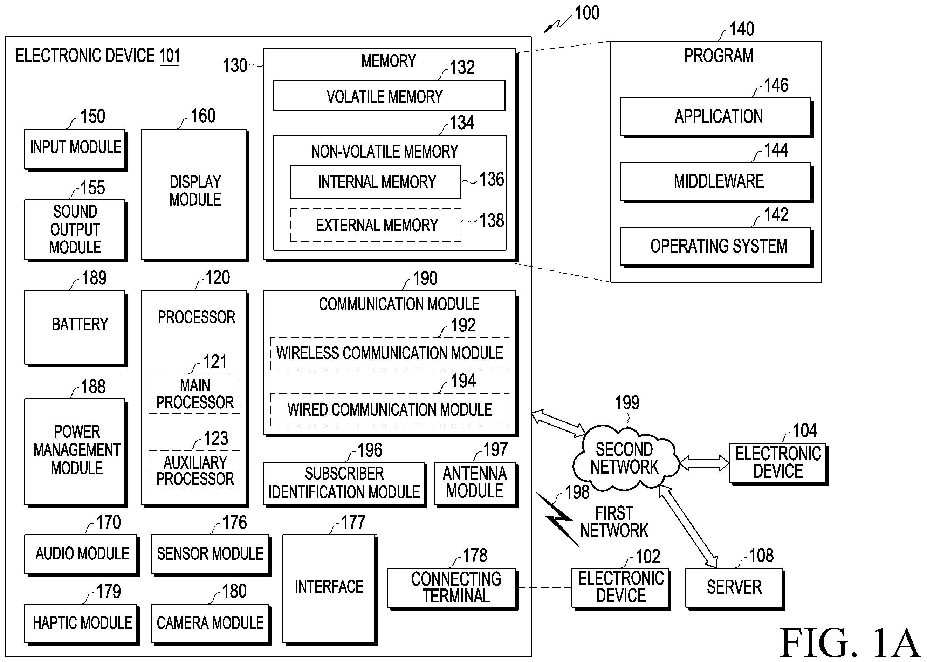

FIG. 1A is a block diagram illustrating an electronic device 101 in a network environment 100 according to an embodiment. Referring to FIG. 1A, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductive body or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

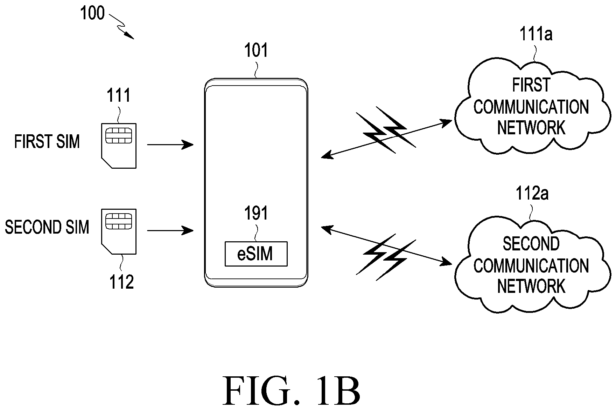

FIG. 1B is a view illustrating a network environment 100 including an electronic device according to various embodiments. Referring to FIG. 1B, according to various embodiments of the present invention, a network 100 may include an electronic device 101, a first communication network 111a, a second communication network 112a, or a third communication network (not shown).

According to various embodiments, the electronic device 101 may operate in a dual SIM dual standby (DSDS) mode or a dual SIM dual active (DSDA) mode supporting a plurality of SIMs in one device. For example, the electronic device 101 may be equipped with two SIMs, e.g., a first SIM 111 and/or a second SIM 112. The first SIM 111 and the second SIM 112 may be removable SIMs (rSIMs). The rSIM may be a SIM detachable from a slot provided in the electronic device 101 and its form/specifications are not limited to specific ones. For example, the electronic device 101 may be equipped with two SIM cards to support the two SIMs. According to an embodiment, for convenience of description, the first SIM 111 and the second SIM 112 are shown as SIM cards, but are not limited thereto. The electronic device 101 may include an embedded SIM (eSIM) 191. For example, the electronic device 101 may be implemented to include only the eSIM 191, and the eSIM 191 may activate a plurality of profiles. In this case, a dual SIM-based operation based on the plurality of profiles may be performed. The electronic device 101 may be implemented to include the eSIM 191 and a slot for mounting one or more SIMs. In this case, the electronic device 101 may perform the dual SIM-based operation based on information stored in an rSIM inserted (or connected) in the slot and the profile activated by the eSIM 191. The electronic device 101 may perform dual SIM-based operations based on two rSIMs, and the combination is not limited. For example, at least one of the first SIM 111 or the second SIM 112 may be replaced with an eSIM or an integrated SIM (iSIM). In this case, at least part of the information stored in the rSIM may be replaced by information about the profile activated by the eSIM. Hereinafter, for convenience of description, the SIM card will be referred to as a SIM. As illustrated in FIG. 1B, two SIM cards, the first SIM 111 and the second SIM 112, may be mounted in the electronic device 101. The electronic device 101 may include a first slot (not shown) and a second slot (not shown), which are structures, to receive the first SIM 111 and the second SIM 112, respectively.

For example, the first SIM 111 is a SIM which has subscription to the mobile network operator of the first communication network 111a. The electronic device 101 may access the first communication network 111a using the first SIM 111 to receive the wireless communication service. The second SIM 112 is a SIM which has subscription to the mobile network operator of the second communication network 112a. The electronic device 101 may access the second communication network 112a using the second SIM 112 to receive the wireless communication service. The first communication network 111a and the second communication network 112a may be provided by the same communication carrier or may be provided by different communication carriers, separately. When the first communication network 111a and the second communication network 112a are provided by the same mobile network operator, the first communication network 111a and the second communication network 112a may mean the same network. Or, different operators may share a communication network. For example, a first mobile network operator may use the first communication network 111a, and a second mobile network operator may be configured to also use the second communication network 111a. According to an embodiment, although not shown, one of ordinary skill in the art will easily understand that the electronic device 101 may further include at least one additional SIM, and the number or type of SIMs is not limited.

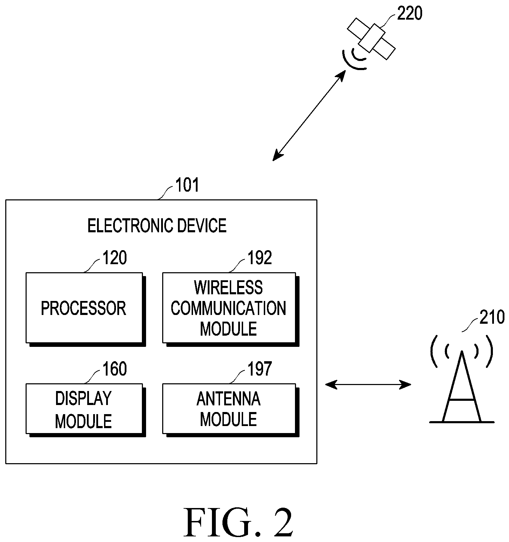

FIG. 2 is a view illustrating an electronic device and a long-range communication network environment according to an embodiment.

The electronic device 101 may transmit and/or receive data through a terrestrial network and/or a non-terrestrial network. The electronic device 101 may have the same as the configuration of the electronic device 101 illustrated in FIG. 1 or may include the configuration of the electronic device 101 illustrated in FIG. 1.

The terrestrial network may refer to a network capable of providing data communication through the terrestrial wireless communication device 210. For example, the terrestrial wireless communication device 210 may include a base station positioned on the ground (e.g., fixed to the ground). The terrestrial wireless communication device 210 may support at least one of various communication schemes supportable by the electronic device 101. For example, the terrestrial wireless communication device 210 may include an eNodeB (e.g., an LTE-based base station) or a gNodeB (e.g., a 5G (or NR)-based base station), but is not limited thereto.

The non-terrestrial network may refer to a network capable of providing data communication through at least one non-terrestrial wireless communication device 220. For example, the non-terrestrial wireless communication device 220 may include at least one of various communication devices such as a base station and a repeater that are not positioned on the ground. For example, the non-terrestrial wireless communication device 220 may include a satellite and/or an unmanned aerial vehicle, but is not limited thereto. For example, the satellite may include a low-earth orbit (LEO) satellite, a medium-earth orbit (MEO) satellite, a geostationary earth orbit (GEO) satellite, and/or a high elliptical orbit (HEO) satellite. For example, the satellite may include an orbiting satellite and/or a geostationary satellite.

The non-terrestrial wireless communication device 220 may support at least one of various wireless communication schemes. For example, the non-terrestrial wireless communication device 220 may support a non-terrestrial network (NR NTN) defined by 3rd generation partnership project (3GPP). Alternatively, the non-terrestrial wireless communication device 220 may support at least one of communication schemes based on various communication standards such as LTE, global system for mobile communications (GSM), or code-division multiple access (CDMA), but is not limited thereto.

The terrestrial network and the non-terrestrial network may be networks independent of each other. Alternatively, the terrestrial network and the non-terrestrial network may be included in at least one network (e.g., networks provided by the same operator) associated with each other.

When communication with the terrestrial network is not possible or is not seamless, the electronic device 101 may perform wireless communication through the non-terrestrial network. Alternatively, the electronic device 101 may perform wireless communication through the non-terrestrial network regardless of the communication state with the terrestrial network.

According to an embodiment, the electronic device 101 may include a processor 120, a display module 160 (e.g., a display), a wireless communication module 192 (e.g., a communication circuit), and/or an antenna module 197. For example, the processor 120 may be operatively, functionally, and/or electrically connected to the display module 160, the wireless communication module 192, and/or the antenna module 197.

The processor 120 may execute, e.g., instructions (e.g., the program 140 of FIG. 1) at least temporarily stored in memory (e.g., the memory 130 of FIG. 1) to control at least one other component (e.g., a hardware or software component) of the electronic device 101 connected to the processor 120, and may perform various data processing or computation. According to an embodiment, the processor 120 may control overall operations related to terrestrial network communication and/or non-terrestrial network communication. For example, the processor 120 may include a communication processor (e.g., the auxiliary processor 123 of FIG. 1) related to terrestrial network communication and/or non-terrestrial network communication.

The display module 160 may visually provide information to the outside (e.g., a user) of the electronic device 101.

According to an embodiment, the display module 160 may display a user interface (UI) indicating information related to a terrestrial network and/or a non-terrestrial network. For example, the UI indicating information related to the terrestrial network and/or the non-terrestrial network may include at least one of UIs indicating information related to the type of network (e.g., cellular communication (3G, 4G, or 5G), short-range communication (e.g., BT, or WI-FI), or satellite communication), the type of network service provider (e.g., satellite communication service provider (Iridium), emergency service provider (ESP)), the strength of the network signal (e.g., signal strength bars, RSSI, or RSRP)), the direction of the communication device (satellite) included in the network (e.g., the orientation, the elevation angle, or the azimuth angle), presence information, and/or the network communication state (e.g., idle, transmit, or receive).

According to an embodiment, the display module 160 may display a UI indicating the service related to the terrestrial network and/or the non-terrestrial network.

According to an embodiment, the service related to the terrestrial network and/or the non-terrestrial network may include at least one of, e.g., an emergency message transmission service, a messaging service, a voice call, a video call, a data communication service, a location-related service, and/or a service related to an indicator.

According to an embodiment, the emergency message transmission service may include, but is not limited to, at least one of an SOS service state information providing service (e.g., display whether it is possible to provide an SOS service), a government office information providing service, an emergency contact information providing service, a text template providing service that minimizes the user's text entry, or a questionnaires service (e.g., a service for providing questionnaires, such as accident type, injured area, or medical information (e.g., age, gender, disease information, or medication information)) for quickly letting the emergency situation know.

According to an embodiment, the messaging service may include at least one of a short message service (SMS), a multimedia messaging service (MMS), or a rich communication suite (RCS) message, but is not limited thereto.

According to an embodiment, the data communication service may include a service through various applications (e.g., web browsers) that provide data communication.

According to an embodiment, the location-related service may include, but is not limited to, at least one of longitude/latitude coordinates, location-related map information about the non-terrestrial communication device 220, navigation, or a street view.

According to an embodiment, the UI example is not limited to the above-mentioned example, and may be provided through another output device (e.g., the sound output module 155 of FIG. 1).

According to an embodiment, the wireless communication module 192 may support various types of wireless communication bands supported by the electronic device 101. For example, the wireless communication band supported by the electronic device 101 may include a short-range wireless communication band (e.g., BT or Wi-Fi), a terrestrial network (e.g., cellular network) communication band, and/or a non-terrestrial network band, but is not limited thereto.

According to an embodiment, the electronic device 101 may support a frequency band (e.g., n255, or n256) related to non-terrestrial network wireless communication. The electronic device 101 may perform non-terrestrial network wireless communication using a frequency band related to non-terrestrial network wireless communication, but is not limited thereto. For example, the electronic device 101 may perform non-terrestrial network wireless communication using at least a portion of the frequency band related to terrestrial network wireless communication.

According to an embodiment, the antenna module 197 may transmit or receive a signal or power to or from the outside (e.g., the external electronic device).

According to an embodiment, the electronic device 101 may perform wireless communication with the non-terrestrial network using at least one antenna among the plurality of antennas included in the antenna module 197. At least one antenna supporting non-terrestrial wireless communication may include a dedicated antenna and/or a multi-use antenna. The dedicated antenna may include an antenna supporting the non-terrestrial network. The multi-use antenna may include an antenna that supports different types of networks and non-terrestrial networks together. For example, the electronic device 101 may communicate with at least one satellite (e.g., a GNSS satellite or a satellite for emergency message service) using at least one non-terrestrial network-dedicated antenna. For example, the multi-use antenna may include an antenna supporting a short-range communication network (e.g., a Bluetooth network or a Wi-Fi network) and/or a terrestrial network (e.g., a long term evolution (LTE) network). The electronic device 101 may support a non-terrestrial network using a plurality of antennas among antennas supporting the terrestrial network.

Hereinafter, in the disclosure, a satellite is mainly mentioned as the non-terrestrial wireless communication device 220, and even if it is mentioned that the satellite provides wireless communication using a specific radio access technology (RAT) (e.g., LTE) or a specific function (e.g., a base station), this is merely an example, and the type thereof is not limited.

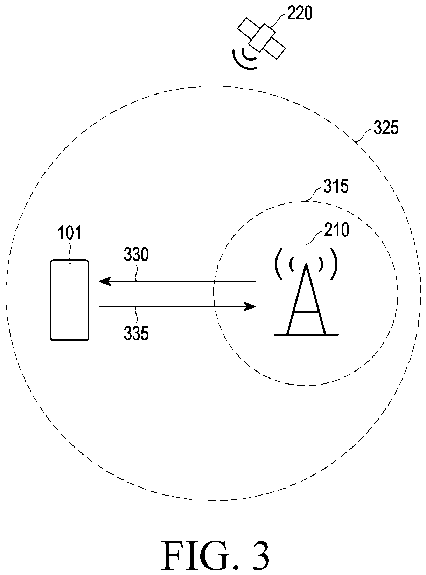

FIG. 3 is a view illustrating access to an electronic device according to an embodiment.

According to an embodiment, the electronic device 101 may be positioned within the coverage 315 (hereinafter, referred to as the terrestrial wireless communication coverage 315) of the terrestrial wireless communication device 210 and/or the coverage 325 (hereinafter, referred to as the non-terrestrial wireless communication coverage 325) of the non-terrestrial wireless communication device 220. The non-terrestrial wireless communication coverage 325 may be relatively larger (e.g., 50 times larger) than the terrestrial wireless communication coverage 315. For example, the non-terrestrial wireless communication coverage 325 may cover an area not covered by the coverage 315 of the terrestrial wireless communication device 210, and accordingly, the electronic device 101 may perform communication even in an area where terrestrial wireless communication is not supported.

According to an embodiment, the electronic device 101 may perform a cell scan within the terrestrial wireless communication coverage 315 and/or the non-terrestrial wireless communication coverage 325. As a result of performing the cell scan, the electronic device 101 may identify a cell provided by the terrestrial wireless communication device 210 and/or a cell provided by the non-terrestrial wireless communication device 220. When there is a cell that meets the cell selection criteria, the electronic device 101 may perform at least some of operations for connecting to a network (e.g., a non-terrestrial network and/or a terrestrial network). Here, the connection to the network may include, e.g., at least some of a preceding operation (e.g., camp-on, or connection procedure (e.g., random connection (RA) procedure)) for registration to the network and/or a registration operation (e.g., attach, or registration)) to the network, but is not limited thereto. When disconnection from the network is required (e.g., moving to another network), the electronic device 101 may perform at least some of the disconnect operations. The operation for disconnecting from the network may include at least some of a detach, release of connection, and/or radio link failure (RLF) declaration from the network, and is not limited to the listed operations.

According to an embodiment, the electronic device 101 may perform at least some of cell scan, disconnection from the network, and/or connection to the network according to movement 330 or 335.

According to an embodiment, when the electronic device 101 is positioned within the terrestrial communication coverage 315 included in the non-terrestrial wireless communication coverage 325 or is positioned in the boundary area of the terrestrial communication coverage 315, the electronic device 101 may connect to the terrestrial network and/or the non-terrestrial network based on the policy (e.g., priority policy) of the electronic device 101.

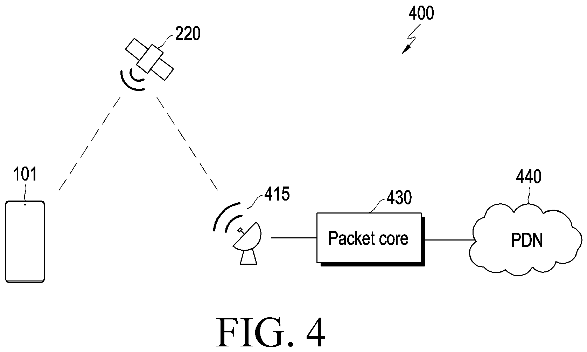

FIG. 4 is a view illustrating a non-terrestrial network system 400 according to an embodiment.

Referring to FIG. 4, a non-terrestrial network system 400 may include a non-terrestrial wireless communication device 220, a radio unit 415, a packet core 430, and/or a PDN 440.

According to an embodiment, the non-terrestrial network system 400 may be implemented, e.g., in a regenerative manner. When implemented in a regenerative manner, the at least one non-terrestrial wireless communication device 220 may include a base station (e.g., eNode B). The non-terrestrial network system 400 may be implemented, e.g., in a bent-pipe manner. The bent-pipe manner may include a passive relay manner that performs frequency conversion and power amplification on the received signal. When the non-terrestrial network system 400 is implemented in a bent-pipe manner, the at least one non-terrestrial wireless communication device 220 may include a relay that converts (e.g., amplifies) and transmits a signal. The implementation method of the non-terrestrial network system 400 and the role of the non-terrestrial wireless communication device 220 described in FIG. 4 are merely examples, and are not limited thereto.

According to an embodiment, the non-terrestrial wireless communication device 220 may include at least one satellite. The non-terrestrial wireless communication device 220 may communicate with, e.g., the electronic device 101 using a terrestrial network (e.g., a cellular network) band and/or a non-terrestrial network band. The terrestrial network band may be, e.g., an operating band supported by long term evolution (LTE) and/or new radio (NR), but is not limited thereto. The non-terrestrial network band may include a band (e.g., n255 and/or n256 bands) defined by 3GPP, but is not limited thereto.

According to an embodiment, the at least one radio unit 415 may receive a signal of the non-terrestrial wireless communication device 220 and transmit the signal to the packet core 430. The radio unit 415 and the non-terrestrial wireless communication device 220 may perform communication using, e.g., a non-terrestrial network band. The non-terrestrial network band may be different from the terrestrial network band, but may be set to be the same in some cases.

According to an embodiment, the at least one packet core 430 may transmit and receive data associated with the electronic device 101 using the radio unit 415. Accordingly, the packet core 430 may process the data associated with the electronic device 101 and transmit the processed data to a packet data network (PDN) 440 (e.g., the Internet). The packet core 415 may include, e.g., at least some of an evolved packet core (EPC) and/or a 5G core (5GC), but is not limited thereto. The packet core 430 may include a packet core associated with the operator of the non-terrestrial wireless communication device 220 and/or a packet core associated with the mobile network operator (MNO). The packet core 430 may be additionally connected to a public switched telephone network (PSTN) (not shown) to transmit and receive data associated with the electronic device 101.

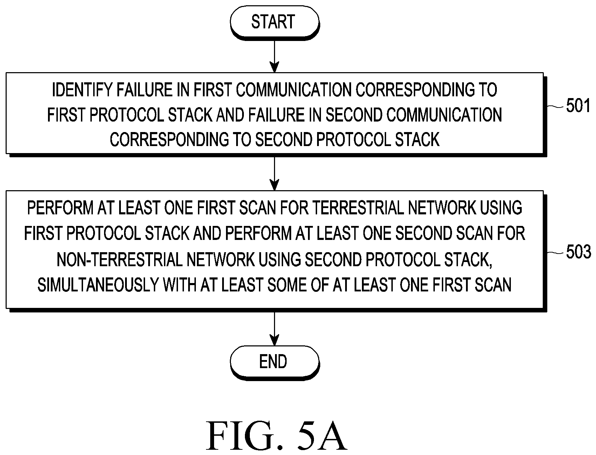

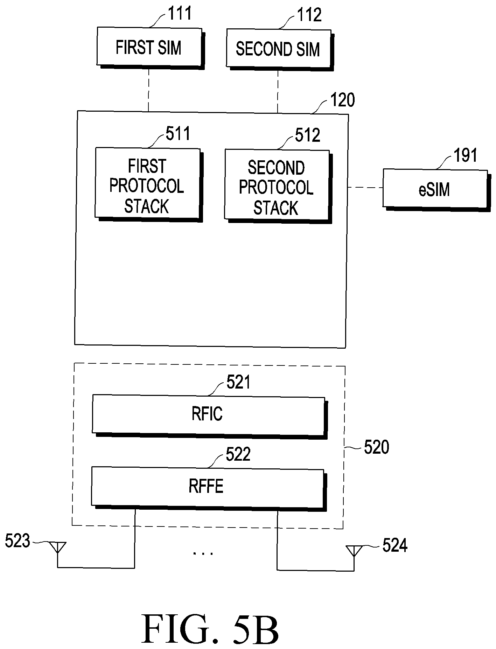

FIG. 5A is a flowchart illustrating an operation method of an electronic device according to an embodiment. The embodiment of FIG. 5A is described with reference to FIG. 5B. FIG. 5B is a view illustrating an electronic device according to an embodiment.

Referring to FIGS. 5A and 5B together, according to an embodiment, in operation 501, the electronic device 101 (e.g., the processor 120) may identify a failure in first communication corresponding to a first protocol stack 511 and a failure in second communication corresponding to a second protocol stack 512. For example, the electronic device 101 may perform the first communication corresponding to the first protocol stack 511 using information associated with a first SIM 111. For example, the electronic device 101 may perform the second communication corresponding to the second protocol stack 512 using information associated with a second SIM 112. For example, the electronic device 101 may perform communication corresponding to the second protocol stack using the information associated with the first SIM 111, and/or may perform communication corresponding to the first protocol stack using the information associated with the second SIM 112. Meanwhile, the information associated with the first SIM 111 and/or the second SIM 112 may be replaced with information stored in the eSIM 191 (e.g., a profile activated based on the eSIM 191, but not limited thereto), but is not limited thereto. Thereafter, the electronic device 101 may identify a failure to perform the first communication and a failure to perform the second communication. For example, the electronic device 101 may identify a failure based on out-of-coverage, entry into a shadow area, and/or a weak electric field, but the cause of the failure is not limited. As described above, the electronic device 101 may fail in both the first communication corresponding to the first protocol stack 511 using the information associated with the first SIM 111 and the second communication corresponding to the second protocol stack 512 using the information associated with the second SIM 112. For convenience of description, the failure in the first communication corresponding to the first protocol stack 511 using the information associated with the first SIM 111 may be referred to as a failure in communication associated with the first SIM 111, and the failure in the second communication corresponding to the second protocol stack 512 may be referred to as a failure in communication associated with the second SIM 112. Meanwhile, FIG. 5B illustrates that the processor 120 includes the protocol stacks 511 and 512, but this is merely an example, which may mean that the processor 120 (e.g., a communication processor) may perform at least one instruction using the protocol stacks 511 and 512, but is not limited thereto.

According to an embodiment, in operation 503, the electronic device 101 may perform at least one first scan for a terrestrial network using the first protocol stack 111 and perform at least one second scan for a non-terrestrial network using the second protocol stack 512, simultaneously with at least some of the at least one first scan, based on identifying the failures in the first communication and the second communication. For example, at least one first scan and/or at least one second scan may include, but is not limited to, at least one scan based on information stored at least one once and/or at least one full scan.

For example, the electronic device 101 may perform a scan using the first protocol stack 511 for at least one of the terrestrial network associated with the first SIM 111 or the terrestrial network associated with the second SIM 112, as at least part of at least one first scan in operation 503. For example, the electronic device 101 may perform a scan using the second protocol stack 512 for at least one of the non-terrestrial network associated with the first SIM 111 or the non-terrestrial network associated with the second SIM 112, as at least part of at least one second scan in operation 503.

For example, only the first SIM 111 may support the non-terrestrial network cell, and the second SIM 112 may not support the non-terrestrial network cell. For example, the electronic device 101 may perform a scan using the first protocol stack 511 for at least one of the terrestrial network associated with the first SIM 111 or the terrestrial network associated with the second SIM 112, as at least part of at least one first scan in operation 503. For example, the electronic device 101 may perform a scan using the second protocol stack 512 for the non-terrestrial network associated with the first SIM 111 as at least part of at least one second scan in operation 503.

For example, only the first SIM 111 may support the non-terrestrial network cell, and the second SIM 112 may not support the non-terrestrial network cell. For example, the electronic device 101 may perform a scan using the first protocol stack 511 for the terrestrial network associated with the first SIM 111 and the terrestrial network associated with the second SIM 112, as at least part of at least one first scan in operation 503. For example, the electronic device 101 may perform a scan using the second protocol stack 502 for the non-terrestrial network associated with the first SIM 111 as at least part of at least one second scan in operation 503.

For example, only the first SIM 111 may support the non-terrestrial network cell, and the second SIM 112 may not support the non-terrestrial network cell. For example, the electronic device 101 may perform a scan using the first protocol stack 511 for the terrestrial network associated with the first SIM 111 as at least part of at least one second scan in operation 503. For example, the electronic device 101 may perform a scan using the second protocol stack 512 for the non-terrestrial network associated with the first SIM 111 as at least part of at least one second scan in operation 503.

For example, only the second SIM 112 may support the non-terrestrial network cell, and the first SIM 111 may not support the non-terrestrial network cell. For example, the electronic device 101 may perform a scan using the first protocol stack 511 for at least one of the terrestrial network associated with the first SIM 111 or the terrestrial network associated with the second SIM 112, as at least part of at least one first scan in operation 503. For example, the electronic device 101 may perform a scan using the second protocol stack 512 for the non-terrestrial network associated with the second SIM 112 as at least part of at least one second scan in operation 503.

For example, only the second SIM 112 may support the non-terrestrial network cell, and the first SIM 111 may not support the non-terrestrial network cell. For example, the electronic device 101 may perform a scan using the first protocol stack 511 for the terrestrial network associated with the first SIM 111 and the terrestrial network associated with the second SIM 112, as at least part of at least one first scan in operation 503. For example, the electronic device 101 may perform a scan using the second protocol stack 512 for the non-terrestrial network associated with the second SIM 112 as at least part of at least one second scan in operation 503.

For example, only the second SIM 112 may support the non-terrestrial network cell, and the first SIM 111 may not support the non-terrestrial network cell. For example, the electronic device 101 may perform a scan using the first protocol stack 511 for the terrestrial network associated with the first SIM 111 as at least part of at least one second scan in operation 503. For example, the electronic device 101 may perform a scan using the second protocol stack 512 for the non-terrestrial network associated with the second SIM 112 as at least part of at least one second scan in operation 503.

For example, both the first SIM 111 and the second SIM 112 may support the non-terrestrial network cell. For example, the electronic device 101 may perform a scan using the first protocol stack 511 for the terrestrial network associated with the first SIM 111 and the terrestrial network associated with the second SIM 112, as at least part of at least one first scan in operation 503. For example, the electronic device 101 may perform a scan using the second protocol stack 512 for the non-terrestrial network associated with the first SIM 111 and the non-terrestrial network associated with the second SIM 112, as at least part of at least one second scan in operation 503.

For example, although not shown, a cell may be detected by at least some of at least one first scan or at least one second scan as described above. The electronic device 101 may detect, e.g., a non-terrestrial network cell using the second protocol stack 512. The electronic device 101 may perform at least one operation for access based on a non-terrestrial network cell, based on the second protocol stack 512, but this is merely an example, and the electronic device 101 may be implemented to perform at least one operation for access based on a non-terrestrial network cell, based on the first protocol stack 511.

For example, although not illustrated, the electronic device 101 may deactivate the scan operation for the terrestrial network, based on performing at least one operation for accessing the non-terrestrial network cell. For example, the electronic device 101 may periodically perform a scan for the terrestrial network using a protocol stack (e.g., the first protocol stack 511, but not limited thereto) that is not used for access, at least partially simultaneously with or after performing at least one operation for access to the non-terrestrial network cell.

Here, at least one first scan for the terrestrial network may be performed using the first protocol stack 511 which is a default data subscriber (DDS), and at least one second scan for the non-terrestrial network may be performed using the second protocol stack 512 which is a non-DDS, but this is not limited thereto. For example, when both SIMs 111 and 112 support a non-terrestrial network, the non-terrestrial network scan may be performed based on the non-terrestrial network preferred PLMN of the SIM (e.g., the first SIM 111 but not limited) corresponding to the DDS, and when the non-terrestrial network cell is not discovered, the non-terrestrial network scan may be performed based on the non-terrestrial network preferred PLMN of the SIM (e.g., the second SIM 112 but not limited) corresponding to the non-DDS. When the non-terrestrial network cell is not identified based on the scan for the non-terrestrial network PLMN, limited access to the non-terrestrial network cell capable of limited camping may be performed.

Meanwhile, the electronic device 101 may identify a communication failure, further identify whether an additional condition is met, and perform operation 503 when the additional condition is met. For example, the additional condition may be cell identification failure as a result of performing a scan a designated number of times (e.g., two times, but there is no limitation), but there is no limitation. For example, the additional condition may be identifying a designated number of, or more, failures in an emergency call setup, but is not limited thereto. For example, when the electronic device 101 is positioned in a shadow area, has a poor RF status, or no service is supported, an additional condition may be met, but is not limited thereto.

For example, the electronic device 101 may perform at least one first scan using a first RF resource and at least one second scan using a second RF resource. For example, the first RF resource may include, but is not limited to, at least a portion of an RF circuit 520 including at least one RFIC 521 and/or at least one RFFE 522 and a first reception antenna 523. For example, the second RF resource may include, but is not limited to, at least a portion of the RF circuit 520 including the at least one RFIC 521 and/or the at least one RFFE 522 and a second reception antenna 524. In another embodiment, it will be understood by one of ordinary skill in the art that the electronic device 101 may perform a scan, based on a single antenna for terrestrial network and non-terrestrial network.

For example, the electronic device 101 may identify PLMN-related information (which may be referred to as a PLMN list, but not limited), for the first PLMN to support a terrestrial network and a non-terrestrial network, based on information stored in the first SIM 111 and/or second SIM 112, but is not limited, and the time of identification is not limited. Table 1 may show an example of PLMN-related information.

**[Table 1]**

| priority | PLMN | supporting RAT |
|---|---|---|
| 1 | A | NR |
| 2 | A | Satellite NG-RAN |
| 3 | B | NR, Satellite NG-RAN |
| 4 | C | Satellite NG-RAN |

For example, the electronic device 101 may identify that PLMNs "A" and "B" support a terrestrial network (e.g., NR) and a non-terrestrial network (e.g., Satellite NG-RAN). The electronic device 101 may perform, e.g., at least one first scan for the terrestrial network (e.g., RAN) of PLMN "A" based on the first protocol stack 511. The electronic device 101 may perform at least one second scan for the non-terrestrial network (e.g., Satellite NG-RAN) of PLMN "A" based on, e.g., the second protocol stack 512. For example, the electronic device 101 may perform at least one operation for communication using information associated with the first SIM 111 based on the second protocol stack 512. For example, the information associated with the first SIM 111 may be accessible by both the first protocol stack 511 and the second protocol stack 512, and may be accessible through, e.g., shared memory, but the implementation method thereof is not limited thereto. For example, the electronic device 101 may identify information stored in the SIM based on the index of each of the first SIM 111 and/or the second SIM 112.

At least some of the at least one first scan for the terrestrial network may be performed simultaneously with at least some of the at least one second scan for the non-terrestrial network. For example, the period during which at least one first scan for the terrestrial network is performed may be the same as the period during which at least one second scan for the non-terrestrial network is performed. For example, the period during which at least one first scan for the terrestrial network is performed may include the period during which at least one second scan for the non-terrestrial network is performed. For example, the period during which at least one second scan for the non-terrestrial network is performed may include the period during which at least one first scan for the terrestrial network is performed. For example, a portion of the period during which at least one first scan for the terrestrial network is performed may overlap a portion of the period during which at least one second scan for the non-terrestrial network is performed. For example, a period of the first scan for the terrestrial network and a period of the second scan for the non-terrestrial network may be included together within a predetermined time unit. In this case, it will be understood by one of ordinary skill in the art that even if the period of the first scan and the period of the second scan do not physically overlap, the first scan and the second scan may be performed simultaneously. As described above, a scan of the non-terrestrial network in an area where the terrestrial network is not supported may be performed relatively early. For example, in a comparative example, if a cell is not identified after the scan for the terrestrial network is performed, a scan for the non-terrestrial network may be performed later. In the comparative example, as the scan for the non-terrestrial network is performed relatively late, there may be a possibility that the execution of an emergency service (e.g., an emergency call) may be delayed. According to the above-described embodiment, at least one first scan for the terrestrial network and at least one second scan for the non-terrestrial network may be performed at least partially simultaneously, and accordingly, as the non-terrestrial network scan is performed relatively early, the delay in performing the emergency service may be alleviated. In particular, since the emergency service is highly likely to be required in an emergency situation, it may be required to perform the emergency service early, and according to an embodiment, it is possible to perform an emergency service early.

According to an embodiment, the electronic device 101 may perform at least one operation for accessing the non-terrestrial network cell identified based on at least some of the results of at least one second scan. For example, when the electronic device 101 is positioned outside the coverage of the terrestrial network while being positioned within the coverage of the non-terrestrial network, the electronic device 101 may fail to identify the terrestrial network cell as a result of at least one first scan, and may identify the non-terrestrial network cell as a result of at least one second scan. For example, the electronic device 101 may identify a non-terrestrial network cell which is a suitable cell, but is not limited thereto, and it will be understood by one of ordinary skill in the art that selection of an acceptable cell and/or any cell may be performed. The electronic device 101 may perform at least one operation (e.g., may include, but is not limited to, a camp-on, RA procedure, RRC connection procedure, and/or network attach (or registration) procedure) for accessing the identified cell. Accordingly, the electronic device 101 may perform a network attach based on a non-terrestrial network cell, and/or may perform limited camp-on. As described above, a scan of the non-terrestrial network cell may be performed relatively early, and accordingly, the network attach based on the non-terrestrial network cell may be performed relatively early. The electronic device 101 may deactivate (or refrain from) an operation using the first protocol stack 511, which may be referred to as deactivation of the first protocol stack 511. For example, the electronic device 101 may deactivate the operation using the first protocol stack 511 based on identifying success in at least part of access to the non-terrestrial network cell, but the trigger for the deactivation is not limited. Accordingly, a scan for the terrestrial network may not be performed, but this is exemplary. For example, in another example, the electronic device 101 may perform at least some (e.g., a terrestrial network scan) of operations using the first protocol stack 511 even after the access to the non-terrestrial network cell is successful. Meanwhile, deactivation of an operation using the first protocol stack 511 based on performing at least one operation for access based on a non-terrestrial network cell is optional, and an operation using the first protocol stack 511 may be performed (e.g., performing at least one scan associated with the first SIM 111).

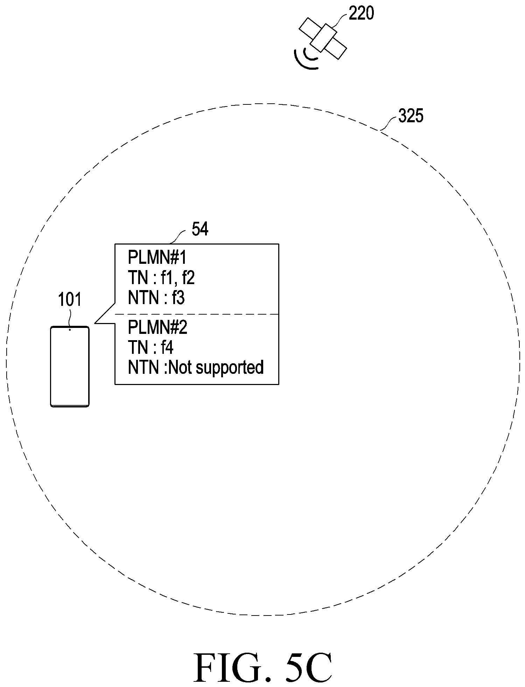

FIG. 5C is a view illustrating a scan of a terrestrial network and a non-terrestrial network by an electronic device according to an embodiment.

According to an embodiment, the electronic device 101 may identify failure in communication using both protocol stacks 511 and 512, e.g., in the state of being positioned in the coverage 325 of the non-terrestrial wireless communication device 220. For example, the electronic device 101 may identify a failure in first communication corresponding to a first protocol stack 511 and a failure in second communication corresponding to a second protocol stack 512. As described above, there is no limitation on the cause and/or identification method of the failure in the first communication and/or the failure in the second communication. Accordingly, since the electronic device 101 may not perform communication using both protocol stacks 511 and 512, the electronic device 101 may not perform an emergency service even in an emergency situation.

According to an embodiment, the electronic device 101 may perform at least one first scan for the terrestrial network using the first protocol stack 511, and may perform at least one second scan for the non-terrestrial network using the second protocol stack 512 simultaneously with at least some of the at least one first scan. The electronic device 101 may perform at least one operation for accessing the non-terrestrial network cell identified based on at least some of the results of at least one second scan. For example, as illustrated in FIG. 5C, the electronic device 101 may store, e.g., PLMN-related information 54 which is information stored in the first SIM 111, the second SIM 112, and/or the eSIM 191. In the example of FIG. 5C, the PLMN-related information 54 may include information indicating that the first PLMN (PLMN#1) supports frequencies (or an absolute radio frequency channel number (ARFCN) and/or an operating band) of f1 and f2 which are for the terrestrial network (TN) and supports a frequency of f3 which is the non-terrestrial network (NTN). The PLMN-related information 54 may include information indicating that the second PLMN (PLMN #2) supports a frequency of f4, which is for the terrestrial network TN, and does not support the non-terrestrial network NTN. In this case, the electronic device 101 may perform at least some of the frequencies corresponding to the terrestrial network TN based on the first protocol stack 511 independently from the SIM and/or the PLMN, and may perform at least some of the frequencies corresponding to the non-terrestrial network NTN based on the second protocol stack 512. For example, the electronic device 101 may perform a scan for at least some of frequencies of f1, f2, and f4 corresponding to the terrestrial network TN, based on the first protocol stack 511. For example, the electronic device 101 may perform a scan for the frequency of f3 corresponding to the non-terrestrial network (NTN) based on the second protocol stack 512. Accordingly, the electronic device 101 may identify the non-terrestrial network cell according to the scan using the second protocol stack 512. The electronic device 101 may access the identified non-terrestrial network cell to perform a service (which may be, e.g., an emergency service, but the type of service is not limited). According to a comparative example, when cell identification fails according to a scan result of the terrestrial network, the electronic device 101 may perform a non-terrestrial network scan later, thereby delaying the non-terrestrial network scan. The electronic device 101 may perform at least a portion of the non-terrestrial network scan using the second protocol stack 512 simultaneously with at least a portion of the terrestrial network scan, thereby enabling early identification of the non-terrestrial network and/or early access to the non-terrestrial network.

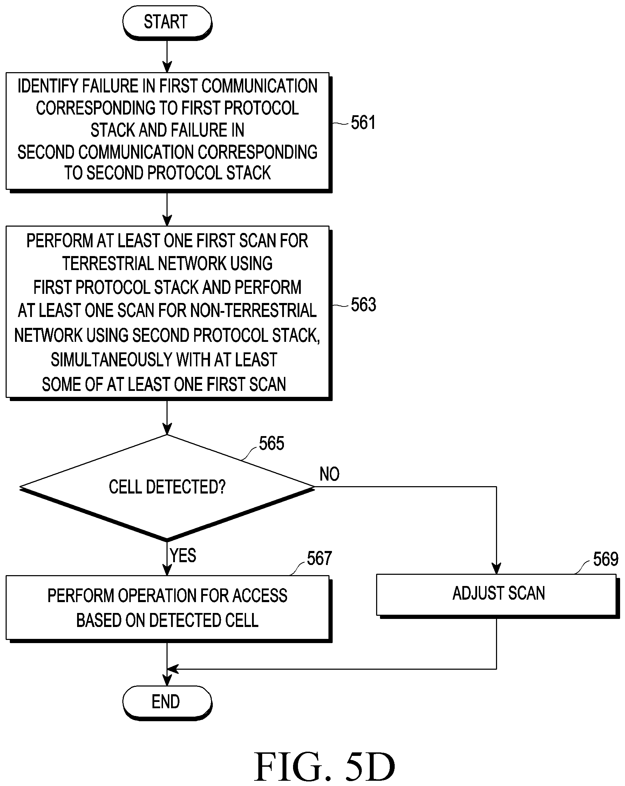

FIG. 5D is a flowchart illustrating an operation method of an electronic device according to an embodiment.

According to an embodiment, in operation 561, the electronic device 101 may identify a first communication failure corresponding to the first protocol stack 511 and a second communication failure corresponding to the second protocol stack 512. Based on the failure in both communications, in operation 563, the electronic device 101 may perform at least one first scan for the terrestrial network using the first protocol stack, and may perform at least one second scan for the non-terrestrial network simultaneously with at least some of the at least one first scan, using the second protocol stack. Since the identification of the communication failure and the substantial simultaneous scan of the terrestrial network and the non-terrestrial network in operations 561 and 563 have been described above, the detailed description thereof is not repeated. In operation 565, the electronic device 101 may identify whether a cell is detected, based on at least some of the at least one first scan and the at least one second scan. If it is identified that the cell is detected (Yes in operation 565), the electronic device 101 may perform an operation for accessing based on the detected cell in operation 567. For example, in operation 565, a terrestrial network cell may be detected, or a non-terrestrial network cell may be detected. The electronic device 101 may perform an operation for accessing based on the detected terrestrial network cell or non-terrestrial network cell. As described above, when the non-terrestrial network cell is detected using the second protocol stack 512, the electronic device 101 may perform at least one operation for access based on the non-terrestrial network cell using the second protocol stack 512, but this is exemplary and is not limited thereto, and the protocol stack for scanning and the protocol stack for access may be implemented differently.

According to an embodiment, when it is identified that the cell is not detected according to the at least one first scan and the at least one second scan (No in operation 565), the electronic device 101 may adjust at least some of the scans in operation 569. The electronic device 101 may perform an adjusted scan instead of, e.g., operation 563. For example, the electronic device 101 may perform an adjusted scan for performing at least one third scan that scans the terrestrial network associated with the second SIM 112 using the first protocol stack 511 or performing at least one third scan that scans the non-terrestrial network associated with the first SIM 111 using the first protocol stack 511, but the type is not limited, and various examples of adjustment are described below.

For example, only the first SIM 111 may support the non-terrestrial network cell, and the second SIM 112 may not support the non-terrestrial network cell. For example, the electronic device 101 may perform a scan using the first protocol stack 511 for the terrestrial network associated with the first SIM 111 as at least part of at least one second scan in operation 563. For example, the electronic device 101 may perform a scan using the second protocol stack 512 for the non-terrestrial network associated with the first SIM 111 as at least part of at least one second scan in operation 563. If cell detection fails based on the scans based on operation 563, the electronic device 101 may adjust the scan in operation 569. For example, when cell detection fails, the electronic device 101 may perform at least one third scan for scanning a terrestrial network associated with the second SIM 112 using the first protocol stack 511. The electronic device 101 may maintain (or repeat) the execution of at least one second scan for the non-terrestrial network associated with the second SIM 112 using the second protocol stack 512. At least some of the at least one third scan may be performed simultaneously with at least some of the at least one second scan. Alternatively, e.g., when cell detection fails, the electronic device 101 may perform at least one third scan for scanning a non-terrestrial network associated with the first SIM 111 using the first protocol stack 511. The electronic device 101 may perform at least one fourth scan for scanning a terrestrial network associated with the second SIM 112 using the second protocol stack 512. At least some of the at least one third scan may be performed simultaneously with at least some of the at least one fourth scan.

For example, only the second SIM 112 may support the non-terrestrial network cell, and the first SIM 111 may not support the non-terrestrial network cell. For example, the electronic device 101 may perform a scan using the first protocol stack 511 for the terrestrial network associated with the first SIM 111 as at least part of at least one second scan in operation 563. For example, the electronic device 101 may perform a scan using the second protocol stack 512 for the non-terrestrial network associated with the second SIM 112 as at least part of at least one second scan in operation 563. For example, when cell detection fails, the electronic device 101 may perform at least one third scan for scanning a terrestrial network associated with the second SIM 112 using the first protocol stack 511. The electronic device 101 may maintain (or repeat) the execution of at least one second scan for the non-terrestrial network associated with the second SIM 112 using the second protocol stack 512. At least some of the at least one third scan may be performed simultaneously with at least some of the at least one second scan. Alternatively, e.g., when cell detection fails, the electronic device 101 may perform at least one third scan for scanning a non-terrestrial network associated with the second SIM 112 using the first protocol stack 511. The electronic device 101 may perform at least one fourth scan for scanning a terrestrial network associated with the second SIM 112 using the second protocol stack 512. At least some of the at least one third scan may be performed simultaneously with at least some of the at least one fourth scan.

Meanwhile, the adjustment of the scan is merely exemplary, and the electronic device 101 may maintain (or repeat) the execution of the at least one first scan and the at least one second scan, based on the cell detection failure according to the at least one first scan and the at least one second scan.

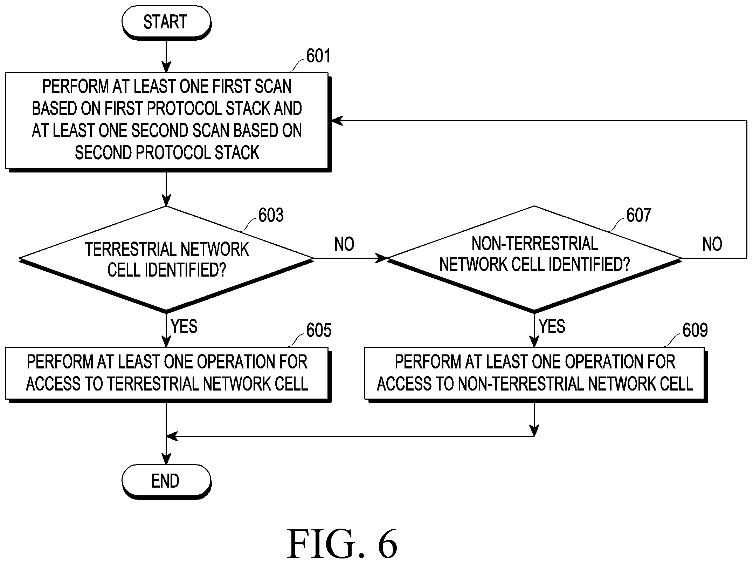

FIG. 6 is a flowchart illustrating an operation method of an electronic device according to an embodiment.

According to an embodiment, in operation 601, the electronic device 101 may perform at least one first scan for the terrestrial network using the first protocol stack 511, and may perform at least one second scan for the non-terrestrial network using the second protocol stack 512 simultaneously with at least some of the at least one first scan. In operation 603, the electronic device 101 may identify whether a terrestrial network cell is identified based on the result of at least one first scan. If the terrestrial network cell is identified (Yes in operation 603), the electronic device 101 may perform at least one operation for accessing the terrestrial network cell in operation 605. Thereafter, the electronic device 101 may perform communication based on the terrestrial network cell. In this case, the electronic device 101 may stop the non-terrestrial network scan based on the second protocol stack 512. The electronic device 101 may perform a scan associated with a PLMN (or cell) corresponding to the second SIM 112, based on the second protocol stack 512. For example, the electronic device may stop the mode (e.g., emergency mode) of the terrestrial network scan based on the first protocol stack 511 and the non-terrestrial network scan based on the second protocol stack 512 and perform a mode (e.g., normal mode) for performing terrestrial network communication and performing a scan associated with the second SIM 112 based on the first protocol stack 511.

When the terrestrial network cell is not identified (No in operation 603), the electronic device 101 may identify whether the non-terrestrial network cell is identified in operation 607. Meanwhile, operations 603 and 607 may mean that the priority for the terrestrial network cell of performing at least one operation for accessing is higher than the priority for the non-terrestrial network cell, and as described above in operation 601, at least one first scan for the terrestrial network and at least one second scan for the non-terrestrial network may be performed at least partially simultaneously. If the non-terrestrial network cell is identified (607-Yes), the electronic device 101 may perform at least one operation for accessing the non-terrestrial network cell in operation 609. When the non-terrestrial network cell is a suitable cell, the electronic device 101 may perform an unlimited service (or communication) based on the non-terrestrial network cell. If the electronic device 101 performs limited camp-on, the electronic device 101 may perform a limited service (or communication) (e.g., performing an emergency call or receiving an emergency message (e.g., an earthquake and tsunami warning system (ETWS) message or a commercial mobile alert system (CMAS) message), but the type thereof is not limited). As described above, the electronic device 101 may preferentially access the terrestrial network cell even when both the terrestrial network cell and the non-terrestrial network cell are identified according to simultaneous scan, but this is exemplary, and it will be understood by one of ordinary skill in the art that the electronic device 101 may be implemented to preferentially access the non-terrestrial network cell. Accordingly, the electronic device 101 may preferentially access a terrestrial network cell (or, in another implementation, a non-terrestrial network cell). When the non-terrestrial network cell is not identified (No in operation 607), the electronic device 101 may perform at least one first scan for the terrestrial network using the first protocol stack 511 and may perform at least one second scan for the non-terrestrial network using the second protocol stack 512 simultaneously with at least some of the at least one first scan in operation 601.

In an embodiment, the electronic device 101 may determine a cell to be preferentially connected of a terrestrial network cell or a non-terrestrial network cell, based on whether an additional condition is met. For example, when the reception strength for the terrestrial network cell is larger than or equal to a threshold, the electronic device 101 may preferentially access the terrestrial network cell, and when the reception strength of the terrestrial network cell is less than the threshold, the electronic device 101 may preferentially access the non-terrestrial network cell. Accordingly, when the electronic device 101 is positioned in the weak electric field of the terrestrial network, the electronic device 101 may provide a stable service by connecting to the non-terrestrial network cell. Meanwhile, priority determination based on reception strength is merely exemplary, and it will be understood by one of ordinary skill in the art that the conditions for priority determination are not limited.

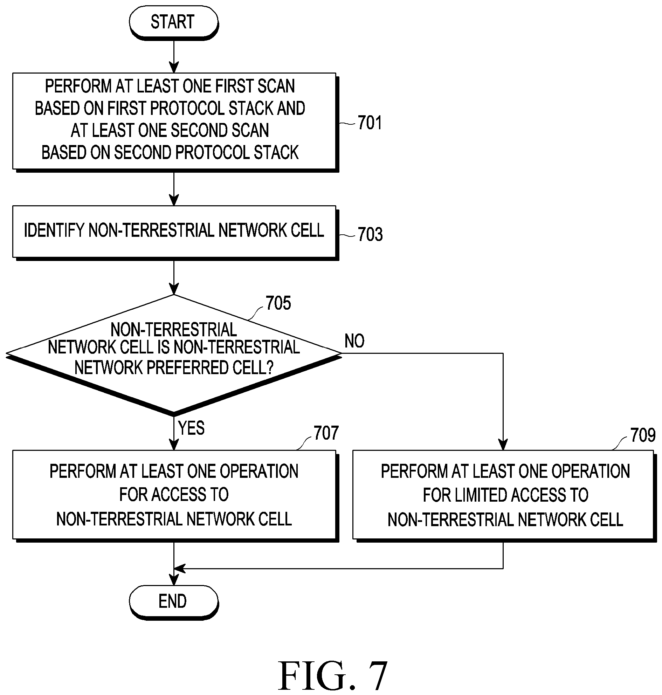

FIG. 7 is a flowchart illustrating an operation method of an electronic device according to an embodiment.

According to an embodiment, in operation 701, the electronic device 101 may perform at least one first scan associated with the terrestrial network using the first protocol stack 511 and at least one second scan associated with the non-terrestrial network using the second protocol stack 512. In operation 703, the electronic device 101 may identify the non-terrestrial network cell, based on at least some of the at least one second scan. In operation 705, the electronic device 101 may identify whether the identified non-terrestrial network cell is a cell that prefers (or supports) the non-terrestrial network. For example, the electronic device 101 may identify whether the PLMN identified based on the system information block (SIB) from the non-terrestrial network cell matches a non-terrestrial network preferred PLMN (NTN-preferred PLMN). When the identified non-terrestrial network cell is a non-terrestrial network preferred (or supporting) cell (Yes in operation 705), the electronic device 101 may perform at least one operation for access to the non-terrestrial network cell in operation 707. The electronic device 101 may perform, e.g., an attach procedure for the non-terrestrial network, and if successful, may perform an available service. When the identified non-terrestrial network cell is not a non-terrestrial network preferred (or supporting) cell (No in operation 705), the electronic device 101 may perform at least one operation for limited access to the non-terrestrial network cell (e.g., limited camp on, but the access scheme is not limited) in operation 709. After performing the limited access, the electronic device 101 may perform a limited service based on the non-terrestrial network cell.

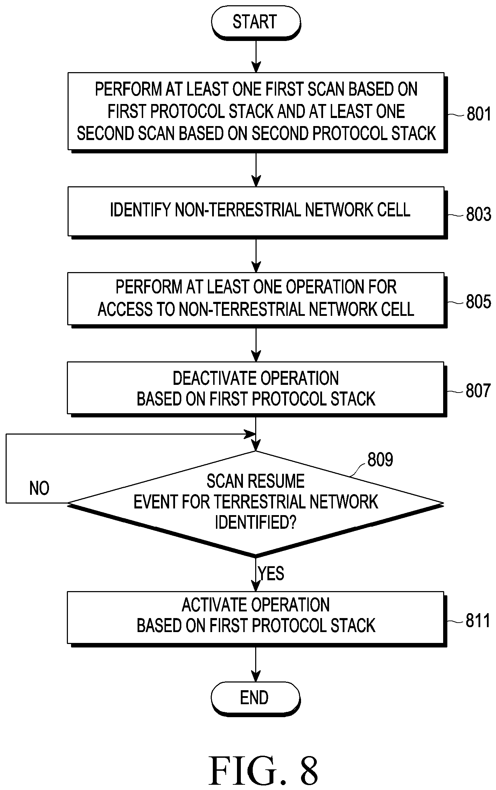

FIG. 8 is a flowchart illustrating an operation method of an electronic device according to an embodiment.

According to an embodiment, in operation 801, the electronic device 101 may perform at least one first scan associated with the terrestrial network using the first protocol stack 511 and at least one second scan associated with the non-terrestrial network using the second protocol stack 512. In operation 803, the electronic device 101 may identify the non-terrestrial network cell, based on at least some of the at least one second scan. In operation 805, the electronic device 101 may perform at least one operation for accessing the non-terrestrial network cell. In operation 807, the electronic device 101 may deactivate an operation using the first protocol stack 511. In operation 809, the electronic device 101 may identify whether a scan resume event for the terrestrial network is identified. For example, the electronic device 101 may start the timer based on deactivation of the operation using the first protocol stack 511 in operation 807, and may identify expiration of the timer as a scan resume event for the terrestrial network. For example, the electronic device 101 may identify the RRC state for the non-terrestrial network being an idle state as a scan resume event for the terrestrial network. For example, the electronic device 101 may identify the non-terrestrial network-based service being not performed as a scan resume event for the terrestrial network, but the above-described matters are merely examples, and the scan resume event for the terrestrial network is not limited thereto. When the scan resume event is identified (Yes in 809), the electronic device 101 may activate the operation using the first protocol stack 511 in operation 811. As at least some of operations using the first protocol stack 511, the electronic device 101 may perform a scan for bands associated with the first SIM 111 or perform a scan for the terrestrial network, but this is merely an example, and the type of operations using the first protocol stack 511 is not limited.

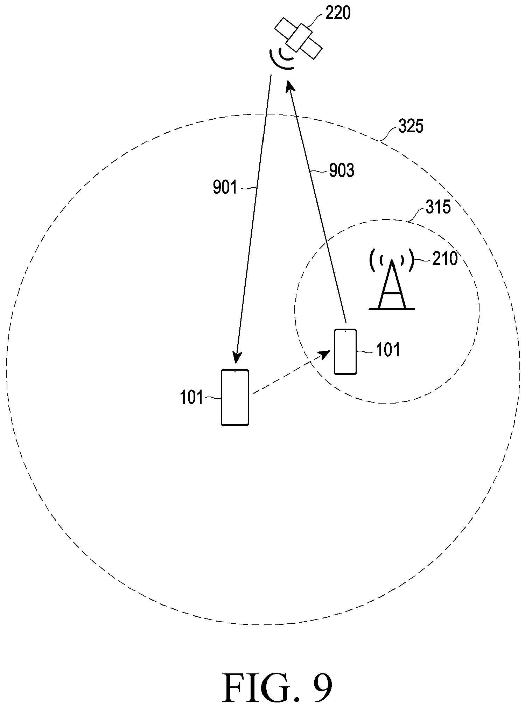

FIG. 9 is a view illustrating handover from a non-terrestrial network cell to a terrestrial network cell according to an embodiment.

According to an embodiment, the electronic device 101 may access a network based on a non-terrestrial wireless communication device 220, e.g., within the coverage 325 of the non-terrestrial wireless communication device 220. In this case, the non-terrestrial wireless communication device 220 may be a source node. The electronic device 101 may receive an RRC reconfiguration message 901 from the non-terrestrial wireless communication device 220. The RRC reconfiguration message 901 may include a measurement configuration. For example, the electronic device 101 may be requested to perform the following types of measurement.
- intra-frequency measurement: measurement at downlink carrier frequency(ies) of serving cell(s)
- inter-frequency measurement: measurement at frequencies different from any frequency among downlink carrier frequency(ies) of serving cell(s)
- measurement in the frequency of inter-RAT (e.g., NR, UTRA, GERAN, CDMA 2000 HRPD or CDMA2000 1xRTT)

The measurement configuration may include information about the measurement object. The measurement object may include, e.g., the subcarrier spacing and frequency/time positions of the reference signal to be measured. The electronic device 101 may identify the frequency for measurement based on the measurement object in the measurement configuration. The measurement object may also include information indicating a frequency to be measured (e.g., ARFCN-ValueEUTRA and/or ARFCN-ValueNR), a measurement object identity, or a blacklist and/or whitelist of cells. Meanwhile, 3GPP TS 38.821 describes handover between a terrestrial network and a non-terrestrial network, and the network may support handover between the terrestrial network and the non-terrestrial network. Accordingly, e.g., the measurement target of the RRC reconfiguration message 901 may include information (e.g., ARFCN) about the terrestrial wireless communication device 210, which is a terrestrial network. The electronic device 101 may perform measurement on terrestrial network communication. For example, the electronic device 101 may perform measurement on at least one of a reference signal received power (RSRP), reference signal received quality (RSRQ), reference signal strength indicator (RSSI), or signal to interference-plus-noise ratio (SINR) corresponding to at least one of inter-frequency, intra-frequency, or inter-RAT according to the measurement configuration, but not limited thereto.

As shown in FIG. 9, the electronic device 101 may move into the coverage 315 of the terrestrial wireless communication device 210. The electronic device 101 may perform measurement on terrestrial network communication even when the electronic device 101 is positioned within the coverage 315 of the terrestrial wireless communication device 210, and may identify whether the measurement result meets the report criteria. For example, the measurement configuration of the RRC reconfiguration message 901 may include a reporting configuration. For example, the reporting configuration may include at least one of a report criterion, a reporting format, or an RS type, but not limited thereto. The report criterion is a condition to trigger the electronic device 101 to transmit a measurement report and may be a periodic or single event description. For, e.g., LTE communication, the reporting format may be information about quantity and relevant information (e.g., the number of cells to be reported) that the UE includes in the measurement report. For, e.g., 5G communication, the reporting format may be per-cell and per-beam quantity and other related information (e.g., the maximum per-cell number and the maximum number of cells to be reported) that is to be included in the measurement report. The RS type may denote, e.g., the RS of the beam to be used by the electronic device 101 and the measurement result.

According to an embodiment, the electronic device 101 may determine that the measurement result meets the report criteria. The electronic device 101 may identify the measurement result from the, e.g., the physical layer, and the electronic device 101 may determine whether the report criterion is met based on the measurement result. The electronic device 101 may perform filtering (e.g., layer 3 filtering) on the result and determine whether the report criterion is met based on the result of the filtering. According to an embodiment, "measurement result" may denote at least one of, e.g., a value obtained from the physical layer or a value resultant from filtering the value obtained from the physical layer. The report criteria may include, but are not limited to, the following:
- Event A1: Serving becomes better than threshold
- Event A2: Serving becomes worse than threshold
- Event A3: Neighbour becomes offset better than PCell/PSCell(or SpCell of NR)
- Event A4: Neighbour becomes worse than threshold
- Event A5: PCell/ PSCell(or, SpCell of NR) becomes worse than threshold1 and neighbour(or neighbour/SCell of NR) becomes better than threshold2
- Event A6: Neighbour becomes offset better than SCell(or SCell of NR)
- Event B 1: Inter RAT neighbour becomes better than threshold
- Event B2: PCell becomes worse than threshold1 and inter RAT neighbour becomes better than threshold2

The above-described report criteria are merely an example, and their type is not limited.

According to an embodiment, the electronic device 101 may perform the measurement, which needs to be performed by the measurement configuration, not constantly but at measurement periods. The electronic device 101 may transmit a measurement report message 903 based on meeting the report criteria. For example, the electronic device 101 may transmit a measurement report message 903 when the met report criteria among the above-described report criteria are maintained during a time to trigger. The non-terrestrial wireless communication device 220 may identify whether to hand the electronic device 101 over to the terrestrial wireless communication device 210 (e.g., a target cell), based on the received measurement report message 903. When it is identified that the handover is to be performed, the non-terrestrial wireless communication device 220 may transmit a handover command to the electronic device 101. The electronic device 101 may perform an operation (e.g., an RA procedure, but not limited thereto) for accessing the terrestrial wireless communication device 210, based on the handover command. Accordingly, the electronic device 101 may be handed over to the terrestrial wireless communication device 210.

In an embodiment, the network may support conditional handover. The electronic device 101 may receive, e.g., a conditional handover command from a network, and may perform an operation (e.g., an RA procedure, but not limited thereto) for accessing the terrestrial wireless communication device 210, based on satisfaction of an execution condition included in the conditional handover command. It will be understood by one of ordinary skill in the art that the configuration related to the handover described in the disclosure may be replaced with conditional handover.

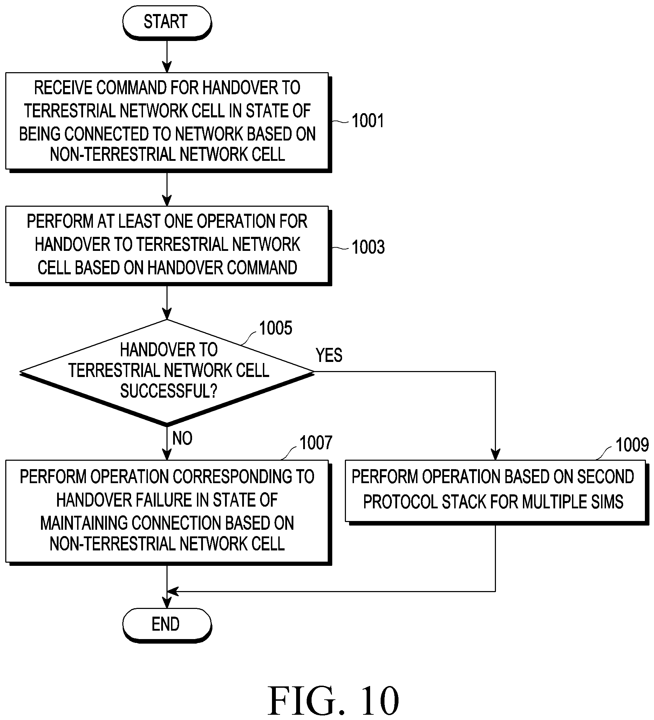

FIG. 10 is a view illustrating handover from a non-terrestrial network cell to a terrestrial network cell according to an embodiment.

According to an embodiment, in operation 1001, the electronic device 101 may receive a command for handover to the terrestrial network cell while connecting to the network based on the non-terrestrial network cell. A configuration for receiving the command for handover to the terrestrial network cell has been described with reference to FIG. 9, and thus a description thereof is not repeated. In operation 1003, the electronic device 101 may perform at least one operation for handover to the terrestrial network cell based on the handover command. For example, the electronic device 101 may perform the RA procedure to the terrestrial network cell as at least one operation for handover, but is not limited thereto. The electronic device 101 may maintain the state of being connected to the network based on the non-terrestrial network cell even while performing at least one operation for handover to the terrestrial network cell. Accordingly, a call failure and/or a data stall that may occur when a failure in handover to the terrestrial network cell occurs may be prevented. For example, if a handover failure occurs while an emergency call is in progress, a call delay in an emergency situation may be caused, and thus a stable emergency call may be performed in an emergency situation.

In operation 1005, the electronic device 101 may determine whether the handover to the terrestrial network cell is successful. For example, the electronic device 101 may identify that the handover fails, based on the failure in the RA procedure and/or the expiration of the T304 timer, but the method of identifying whether the handover succeeds is not limited. For example, the electronic device 101 may identify that the handover is successful, based on completion of the RA procedure (e.g., reception of the RRC configuration complete message).

When the handover to the terrestrial network cell is not successful (No in operation 1005), the electronic device 101 may perform an operation corresponding to the handover failure while maintaining the connection based on the non-terrestrial network cell in operation 1007. For example, the electronic device 101 may re-perform the cell selection and/or RA procedure as the operation corresponding to the handover failure, but this is exemplary and is not limited thereto. When the handover to the terrestrial network cell is successful (Yes in operation 1005), the electronic device 101 may perform an operation based on the second protocol for the plurality of SIMs in operation 1009. For example, the electronic device 101 may perform a scan associated with a PLMN (or cell) corresponding to the second SIM 112, based on the second protocol stack 512. For example, the electronic device may stop the mode (e.g., emergency mode) of the terrestrial network scan based on the first protocol stack 511 and the non-terrestrial network scan based on the second protocol stack 512 and perform a mode (e.g., normal mode) for performing terrestrial network communication based on the first protocol stack 511 and performing a scan of the PLMN (or cell) corresponding to the second protocol stack 512 based on the second protocol stack 512. Alternatively, the electronic device 101 may be implemented to deactivate the second protocol stack 512.

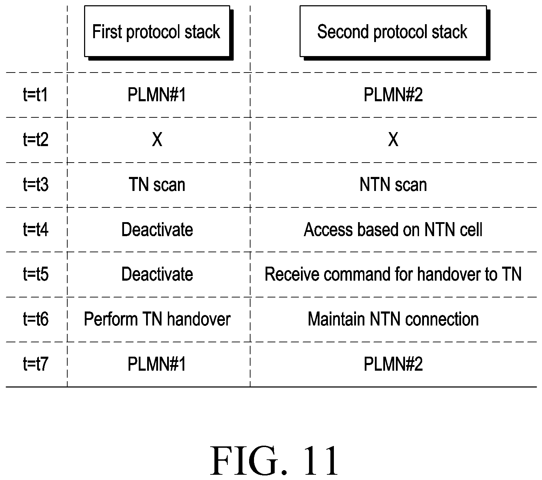

FIG. 11 is a view illustrating operations associated with protocol stacks of an electronic device according to an embodiment.

According to an embodiment, at a first time t1, the electronic device 101 may perform first communication based on a first PLMN (PLMN#1) based on the first protocol stack 511 and may perform first communication based on a second PLMN (PLMN#2) based on the second protocol stack 512. Here, the first PLMN (PLMN#1) may be a PLMN associated with the first SIM 111 corresponding to the first protocol stack 511, and the second PLMN (PLMN#2) may be a PLMN associated with the second SIM 112 corresponding to the second protocol stack 512. The electronic device 101 may perform general multi-SIM-based operations at the first time t1, based on both protocol stacks 511 and 512. For example, when the first SIM 111 corresponds to the DDS and the second SIM 112 corresponds to the non-DDS, the electronic device 101 may perform basic data transmission/reception based on the first protocol stack 511. In this case, the electronic device 101 may wake up during the discontinuous reception (DRX) paging cycle while maintaining the RRC state as the idle state based on the second protocol stack 512, monitoring paging (which may be, e.g., MT paging, but not limited thereto). When paging is identified, the electronic device 101 may perform data transmission/reception based on the second protocol stack 512. Meanwhile, it is merely exemplary that in FIG. 11, the first protocol stack 511 corresponds to the DDS and the second protocol stack 512 corresponds to the non-DDS, but is not limited thereto.

At a second time t2, the electronic device 101 may identify the failure in the first communication corresponding to the first protocol stack 511 and the failure in the second communication corresponding to the second protocol stack 512. There is no limitation on the cause and/or identification method of communication failure. As described above, the electronic device 101 may perform at least one terrestrial network scan based on the first protocol stack 511 and at least one non-terrestrial network scan based on the second protocol stack 512 at a third time t3, in response to failure in communications corresponding to both protocol stacks 511 and 512. As described above, at least one terrestrial network scan and at least one non-terrestrial network scan may be performed at least partially simultaneously, and thus the non-terrestrial network scan may be performed relatively early. For example, it is assumed that the electronic device 101 fails to identify the terrestrial network cell based on the terrestrial network scan and identifies the non-terrestrial network cell based on the non-terrestrial network scan. For example, it is assumed that the electronic device 101 identifies the non-terrestrial network cell of the first PLMN (PLMN#1) based on the second protocol stack 512. In a comparative example, in contrast to the non-terrestrial network scan of the first PLMN (PLMN#1) being performed after the terrestrial network cell is not identified by performing the terrestrial network scan of the first PLMN (PLMN#1) based on the first protocol stack 511, the electronic device 101 according to an embodiment may perform the non-terrestrial network scan of the first PLMN (PLMN#1) based on the second protocol stack 512, and thus the non-terrestrial network cell of the first PLMN (PLMN#1) may be identified relatively early. For example, the electronic device 101 may perform communication based on the first SIM 111 information using the second protocol stack 512, and accordingly, the following operations may be performed.

At a fourth time t4, the electronic device 101 may perform at least one operation for accessing based on the non-terrestrial network cell, based on the second protocol stack 512. The electronic device 101 may perform a network attach based on the non-terrestrial network cell, and/or may perform limited access. At the fourth time t4, the electronic device 101 may deactivate the operation associated with the first protocol stack 511, based on the failure to identify the terrestrial network cell according to the result of the terrestrial network scan and/or the access to the non-terrestrial network cell (e.g., normal access or limited access). Accordingly, the terrestrial network scan based on the first protocol stack 511 may be stopped, but this is merely an example, and it will be understood by one of ordinary skill in the art that the terrestrial network scan based on the first protocol stack 511 may be implemented to continue. When the operation associated with the first protocol stack 511 is deactivated, the electronic device 101 may activate (e.g., perform a terrestrial network scan) the operation associated with the first protocol stack 511 based on the identification of the terrestrial network scan resume event. Alternatively, the electronic device 101 may periodically perform a terrestrial network scan based on the first protocol stack 511, and is not limited thereto.

The electronic device 101 may receive a command for handover to the terrestrial network cell from the non-terrestrial network cell based on the second protocol stack 512 at a fifth time t5. For example, the electronic device 101 may receive an RRC reconfiguration message from the non-terrestrial network cell, based on the second protocol stack 512. The electronic device 101 may perform measurement on a surrounding terrestrial network cell based on information (which may be, e.g., fast release, but is not limited) about the terrestrial network cell included in the measurement object included in the RRC reconfiguration message. The measurement of the terrestrial network cell may also be performed based on the second protocol stack 512, and the electronic device 101 may maintain deactivation of the operation based on the first protocol stack 511. However, this is merely an example, and the electronic device 101 may be implemented to activate the operation based on the first protocol stack 511 based on information about the terrestrial network cell being included in the measurement object. The electronic device 101 may perform measurement reporting based on the second protocol stack 512, based on the measurement result meeting the report criteria. The electronic device 101 may receive a handover command in response to the measurement report.

At a sixth time t6, the electronic device 101 may perform at least one operation (which may be, e.g., an RA procedure, but is not limited thereto) for handover to the terrestrial network based on the first protocol stack 511. The electronic device 101 may maintain the non-terrestrial network connection based on the second protocol stack 512 while at least one operation for handover based on the first protocol stack 511 is performed. Accordingly, a call failure and/or a data stall that may occur when a failure in handover occurs may be prevented. When the handover is successful, the electronic device 101 may perform communication based on the terrestrial network cell of the first PLMN (PLMN #1) based on the first protocol stack 511 by switching the protocol stack. Based on switching of the protocol stack, the electronic device 101 may perform communication associated with the second PLMN (PLMN #2) associated with the second SIM 112 as an operation associated with the second SIM 112, based on the second protocol stack 512. It will be understood by one of ordinary skill in the art that switching of the protocol stack is merely exemplary and may be omitted. For example, the electronic device 101 may perform a scan for the second PLMN (PLMN #2) based on the second protocol stack 512, and may perform at least one operation for access when the cell is identified as a result of the scan. For example, the electronic device may stop the mode (e.g., emergency mode) of the terrestrial network scan based on the first protocol stack 511 and the non-terrestrial network scan based on the second protocol stack 512 and perform a mode (e.g., normal mode) for performing terrestrial network communication based on the first protocol stack 511 and performing a scan of the PLMN (or cell) corresponding to the second protocol stack 512 based on the second protocol stack 512.

According to an embodiment, a computer-readable storage medium storing at least one instruction may be provided. The at least one instruction may, when executed by at least one processor 120 of an electronic device 101, enable the electronic device 101 to perform at least one operation.

According to an embodiment, the at least one operation may comprise identifying a failure in first communication corresponding to a first protocol stack 511 corresponding to a first SIM 111 available to the at least one processor 120 and a failure in second communication corresponding to a second protocol stack 512 corresponding to a second SIM 112 available to the at least one processor 120.

According to an embodiment, the at least one operation may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

According to an embodiment, the at least one first scan may be at least one scan using the first protocol stack for at least one of a terrestrial network associated with the first SIM or a terrestrial network associated with the second SIM.

According to an embodiment, the at least one second scan may be at least one scan using the second protocol stack for a non-terrestrial network associated with the first SIM.

According to an embodiment, the at least one first scan may be at least one scan using the first protocol stack for a terrestrial network associated with the first SIM or a terrestrial network associated with the second SIM, and

According to an embodiment, the at least one second scan may be at least one scan using the second protocol stack for a non-terrestrial network associated with the first SIM.

According to an embodiment, the at least one first scan may be at least one scan using the first protocol stack for a terrestrial network associated with the first SIM.

According to an embodiment, the at least one second scan may be at least one scan using the second protocol stack for a non-terrestrial network associated with the first SIM.

According to an embodiment, the at least one operation may comprise, when cell detection according to the at least one first scan and the at least one second scan fails, performing at least one third scan for a terrestrial network associated with the second SIM using the first protocol stack and repeatedly performing the at least one second scan using the second protocol stack simultaneously with at least some of the third scan.

According to an embodiment, the at least one operation may comprise, when cell detection according to the at least one first scan and the at least one second scan fails, performing at least one third scan for a non-terrestrial network associated with the first SIM using the first protocol stack and performing at least one fourth scan for a terrestrial network associated with the second SIM using the second protocol stack.

According to an embodiment, the at least one first scan may be at least one scan using the first protocol stack for at least one of a terrestrial network associated with the first SIM or a terrestrial network associated with the second SIM.

According to an embodiment, the at least one second scan may be at least one scan using the second protocol stack for at least one of a non-terrestrial network associated with the first SIM or a non-terrestrial network associated with the second SIM.

According to an embodiment, the at least one first scan may be at least one scan using the first protocol stack for at least one of a terrestrial network associated with the first SIM or a terrestrial network associated with the second SIM.

According to an embodiment, the at least one second scan may be at least one scan using the second protocol stack for a non-terrestrial network associated with the second SIM.

According to an embodiment, the at least one first scan may be at least one scan using the first protocol stack for a terrestrial network associated with the first SIM or a terrestrial network associated with the second SIM, and

According to an embodiment, the at least one second scan may be at least one scan using the second protocol stack for a non-terrestrial network associated with the second SIM.

According to an embodiment, the at least one first scan may be at least one scan using the first protocol stack for a terrestrial network associated with the first SIM.

According to an embodiment, the at least one second scan may be at least one scan using the second protocol stack for a non-terrestrial network associated with the second SIM.

According to an embodiment, the at least one operation may comprise, when cell detection according to the at least one first scan and the at least one second scan fails, performing at least one third scan for a terrestrial network associated with the second SIM using the first protocol stack and repeatedly performing the at least one second scan using the second protocol stack simultaneously with at least some of the at least one third scan.

According to an embodiment, the at least one first scan may be at least one scan using the first protocol stack for a terrestrial network associated with the first SIM or a terrestrial network associated with the second SIM, and

According to an embodiment, the at least one second scan may be at least one scan using the second protocol stack for a non-terrestrial network associated with the first SIM or a non-terrestrial network associated with the second SIM.

According to an embodiment, the at least one operation may comprise performing at least one operation for accessing a non-terrestrial network cell identified based on at least some of results of the at least one first scan and the at least one second scan, using the second protocol stack.

According to an embodiment, the at least one operation may comprise deactivating a scan operation for the terrestrial network, based on performing the at least one operation for accessing the non-terrestrial network cell.

According to an embodiment, the at least one operation may comprise periodically performing a scan for a terrestrial network using the first protocol stack not used for accessing the non-terrestrial network using the second protocol stack, at least partially simultaneously with, or after, accessing the non-terrestrial network cell.

According to an embodiment, performing the at least one operation for accessing the non-terrestrial network cell using the second protocol stack may perform the at least one operation for accessing the non-terrestrial network cell, based on determining that a terrestrial network cell is not identified based on a result of the at least one first scan and determining that the non-terrestrial network cell is identified based on at least part of a result of the at least one second scan.

According to an embodiment, the at least one operation may comprise performing at least one operation for accessing a terrestrial network cell, based on determining that the terrestrial network cell is identified based on at least part of a result of the at least one first scan and determining that the non-terrestrial network cell is identified based on at least part of a result of the at least one second scan.

According to an embodiment, performing the at least one operation for accessing the non-terrestrial network cell using the second protocol stack may include performing the at least one operation for accessing the non-terrestrial network cell, based on the detected non-terrestrial network cell being a non-terrestrial network preferred cell.

According to an embodiment, the at least one operation may comprise identifying a scan resume event for the terrestrial network after deactivating the scan operation for the terrestrial network.

According to an embodiment, the at least one operation may comprise performing a scan for the terrestrial network using the first protocol stack, based on identifying the scan resume event.

According to an embodiment, identifying the scan resume event for the terrestrial network may identify expiration of a timer initiated based on deactivation of an operation using the first protocol stack, identify that an RRC state of the non-terrestrial network is an idle state, and/or identify that a service based on the non-terrestrial network is not performed.

According to an embodiment, the at least one operation may comprise receiving an RRC reconfiguration message including a measurement object for an ambient terrestrial network cell of the non-terrestrial network cell (e.g. a target terrestrial network cell at least partly overlapping with and/or adjacent to the non-terrestrial network cell), in a state connected to a network based on the non-terrestrial network cell, using the second protocol stack.

According to an embodiment, the at least one operation may comprise performing measurement on the ambient terrestrial network cell, based on the measurement object included in the RRC reconfiguration message, using the second protocol stack.

According to an embodiment, the at least one operation may comprise transmitting a measurement report including at least part of a result of the measurement on the ambient terrestrial network cell, based on the result of the measurement meeting a report criterion included in the RRC reconfiguration message, using the second protocol stack.

According to an embodiment, the at least one operation may comprise receiving a command for handover to the ambient terrestrial network cell, responsive to the measurement report, using the second protocol stack.

According to an embodiment, the at least one operation may comprise performing at least one operation for handover to the ambient terrestrial network cell, using information about the ambient terrestrial network cell included in the handover command, based on the first protocol stack.

According to an embodiment, connection to the non-terrestrial network cell using the second protocol stack may be maintained while the at least one operation for handover to the ambient terrestrial network cell is performed.

According to an embodiment, the at least one operation may comprise releasing the connection to the non-terrestrial network cell using the second protocol stack, based on success in the handover to the ambient terrestrial network cell according to the at least one operation for handover to the ambient terrestrial network cell and performing at least one scan associated with the second SIM based on the second protocol stack.

According to an embodiment, an electronic device 101 may comprise memory 130 and at least one processor 120 operatively connected to the memory 130.
wherein the memory (130) stores at least one instruction that, when executed by the at least one processor (120), cause the electronic device (101) to perform at least one operation,

According to an embodiment, the at least one operation may comprise identifying a failure in first communication corresponding to a first protocol stack 511 corresponding to a first SIM 111 available to the at least one processor 120 and a failure in second communication corresponding to a second protocol stack 512 corresponding to a second SIM 112 available to the at least one processor 120.

According to an embodiment, the at least one operation may comprise performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or Further, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A computer-readable storage medium storing at least one instruction, wherein the at least one instruction, when executed by at least one processor (120) of an electronic device (101), causes the electronic device (101) to perform at least one operation,
wherein the at least one operation comprises:
identifying a failure in first communication corresponding to a first protocol stack (511) corresponding to a first SIM (111) available to the at least one processor (120) and a failure in second communication corresponding to a second protocol stack (512) corresponding to a second SIM (112) available to the at least one processor (120); and
performing at least one first scan for a terrestrial network using the first protocol stack and performing at least one second scan for a non-terrestrial network using the second protocol stack, simultaneously with at least some of the at least one first scan, based on identifying the failures in the first communication and the second communication.

2. The computer-readable storage medium of claim 1,
wherein the at least one first scan is at least one scan using the first protocol stack for at least one of a terrestrial network associated with the first SIM and a terrestrial network associated with the second SIM, and
wherein the at least one second scan is at least one scan using the second protocol stack for at least one of a non-terrestrial network associated with the first SIM and a non-terrestrial network associated with the second SIM.

3. The computer-readable storage medium of claim 1,
wherein the at least one first scan is at least one scan using the first protocol stack for a terrestrial network associated with the first SIM or a terrestrial network associated with the second SIM, and
wherein the at least one second scan is at least one scan using the second protocol stack for a non-terrestrial network associated with the first SIM or a non-terrestrial network associated with the second SIM.

4. The computer-readable storage medium of claim 1,
wherein the at least one first scan is at least one scan using the first protocol stack for a terrestrial network associated with the first SIM, and
wherein the at least one second scan is at least one scan using the second protocol stack for a non-terrestrial network associated with the first SIM or a non-terrestrial network associated with the second SIM.

5. The computer-readable storage medium of any one of claim 1 to claim 4,
wherein the at least one operation comprises: when cell detection according to the at least one first scan and the at least one second scan fails, performing at least one third scan for a terrestrial network associated with the second SIM using the first protocol stack and repeatedly performing the at least one second scan using the second protocol stack simultaneously with at least some of the third scan.

6. The computer-readable storage medium of any one of claim 1 to claim 5,
wherein the at least one operation comprises: when cell detection according to the at least one first scan and the at least one second scan fails, performing at least one third scan for a non-terrestrial network associated with the first SIM using the first protocol stack and performing at least one fourth scan for a terrestrial network associated with the second SIM using the second protocol stack.

7. The computer-readable storage medium of claim 1,
wherein the at least one first scan is at least one scan using the first protocol stack for at least one of a terrestrial network associated with the first SIM or a terrestrial network associated with the second SIM, and
wherein the at least one second scan is at least one scan using the second protocol stack for at least one of a non-terrestrial network associated with the first SIM or a non-terrestrial network associated with the second SIM.

8. The computer-readable storage medium of any one of claim 1 to claim 7,
wherein the at least one operation comprises: when cell detection according to the at least one first scan and the at least one second scan fails, performing at least one third scan for a terrestrial network associated with the second SIM using the first protocol stack and repeatedly performing the at least one second scan using the second protocol stack simultaneously with at least some of the at least one third scan.

9. The computer-readable storage medium of any one of claims 1 to 8,
wherein the at least one operation comprises: performing at least one operation for accessing a non-terrestrial network cell identified based on at least some of results of the at least one first scan and the at least one second scan, using the second protocol stack.

10. The computer-readable storage medium of claim 9,
wherein the at least one operation comprises: deactivating a scan operation for the terrestrial network, based on performing the at least one operation for accessing the non-terrestrial network cell.

11. The computer-readable storage medium of claim 10,
wherein the at least one operation comprises: periodically performing a scan for a terrestrial network using the first protocol stack not used for accessing the non-terrestrial network using the second protocol stack, at least partially simultaneously with, or after, accessing the non-terrestrial network cell,
wherein performing the at least one operation for accessing the non-terrestrial network cell using the second protocol stack performs the at least one operation for accessing the non-terrestrial network cell, based on determining that a terrestrial network cell is not identified based on a result of the at least one first scan, and
determining that the non-terrestrial network cell is identified based on at least part of a result of the at least one second scan.

12. The computer-readable storage medium of claim 9,
wherein the at least one operation comprises: performing at least one operation for accessing a terrestrial network cell, based on determining that the terrestrial network cell is identified based on at least part of a result of the at least one first scan, and
determining that the non-terrestrial network cell is identified based on at least part of a result of the at least one second scan.

13. The computer-readable storage medium of claim 9,
performing the at least one operation for accessing the non-terrestrial network cell using the second protocol stack includes performing the at least one operation for accessing the non-terrestrial network cell, based on the detected non-terrestrial network cell being a non-terrestrial network preferred cell,
wherein the at least one operation comprises:
identifying a scan resume event for a terrestrial network after deactivating a scan operation for the terrestrial network; and
performing a scan for the terrestrial network using the first protocol stack, based on identifying the scan resume event,
wherein identifying the scan resume event for the terrestrial network identifies expiration of a timer initiated based on deactivation of an operation using the first protocol stack, identifies that an RRC state of the non-terrestrial network is an idle state, and/or identifies that a service based on the non-terrestrial network is not performed.

14. The computer-readable storage medium of claim 9,
wherein the at least one operation comprises, using the second protocol stack:
receiving an RRC reconfiguration message including a measurement object for an ambient terrestrial network cell at least partly overlapping with and/or adjacent to the non-terrestrial network cell, in a state connected to a network based on the non-terrestrial network cell;
performing measurement on the ambient terrestrial network cell, based on the measurement object included in the RRC reconfiguration message;
transmitting a measurement report including at least part of a result of the measurement on the ambient terrestrial network cell, based on the result of the measurement meeting a report criterion included in the RRC reconfiguration message; and
receiving a command for handover to the ambient terrestrial network cell, responsive to the measurement report,
wherein the at least one operation comprises: performing at least one operation for handover to the ambient terrestrial network cell, using information about the ambient terrestrial network cell included in the handover command, based on the first protocol stack, and
wherein connection to the non-terrestrial network cell using the second protocol stack is maintained while the at least one operation for handover to the ambient terrestrial network cell is performed,
wherein the at least one operation comprises: releasing the connection to the non-terrestrial network cell using the second protocol stack, based on success in the handover to the ambient terrestrial network cell according to the at least one operation for handover to the ambient terrestrial network cell and performing at least one scan associated with the second SIM based on the second protocol stack.

15. An electronic device (101) comprising:
memory (130); and
at least one processor (120) operatively connected to the memory (130),
wherein the memory (130) stores at least one instruction that, when executed by the at least one processor (120), cause the electronic device (101) to perform at least one operation,
wherein the at least one operation comprises:
identifying a failure in first communication corresponding to a first protocol stack (511) corresponding to a first SIM (111) available to the at least one processor (120) and a failure in second communication corresponding to a second protocol stack (512) corresponding to a second SIM (112) available to the at least one processor (120); and
performing at least one first scan for a terrestrial network using the first protocol stack and performing at least one second scan for a non-terrestrial network using the second protocol stack, simultaneously with at least some of the at least one first scan, based on identifying the failures in the first communication and the second communication.
